# EUROPEAN PATENT APPLICATION

(11) **EP 4 443 641 A1**
(43) Date of publication of application: **09.10.2024**
(21) Application number: 21966008.1
(22) Date of filing: 01.12.2021
(51) Int. Cl.: H01M 50/597

(54) **BATTERY CELL AND MANUFACTURING METHOD AND DEVICE THEREFOR, BATTERY, AND ELECTRICAL APPARATUS**

(71) Applicant: Contemporary Amperex Technology (Hong Kong) Limited, Central, Central And Western District (HK)
(72) Inventor: ZHOU, Wenlin, Ningde City, Fujian 352100 (CN); XU, Liangfan, Ningde City, Fujian 352100 (CN); WU, Ningsheng, Ningde City, Fujian 352100 (CN); LI, Quankun, Ningde City, Fujian 352100 (CN); WANG, Peng, Ningde City, Fujian 352100 (CN)
(74) Representative: Gong, Jinping
(86) International application number: PCT/CN2021/134843
(87) International publication number: WO 2023/097574

(57) **Abstract**

The present application relates to a battery cell and a method and apparatus for manufacturing same, a battery and a power consuming device, relating to the field of battery manufacturing technology. The present application provides a battery cell, including: a shell; an electrode assembly; and an end cap assembly, including an end cap, a first insulating member and a second insulating member, where the first insulating member is arranged between the electrode assembly and the end cap, so as to insulate and isolate the electrode assembly from the end cap, the second insulating member includes a main body portion and a first flanging portion, the first flanging portion is connected to one end of the main body portion, the main body portion is arranged between the shell and the electrode assembly, so as to insulate and isolate the shell from the electrode assembly, and the first flanging portion is connected to a side of the first insulating member facing the end cap or a side of the first insulating member away from the end cap. The battery cell has a compact structure and a good energy density. The present application further provides a battery and a power consuming device, including the battery cell. The present application further provides a method and apparatus for manufacturing a battery cell.

## Description

### Technical Field

The present application relates to the technical field of battery manufacturing, and in particular to a battery cell and a method and apparatus for manufacturing same, a battery and a power consuming device.

### Background Art

With the continued prosperity of the new energy vehicle market, the industry of traction batteries is rapidly expanding and growing, the lithium battery technology is advancing, and increasingly higher demands are being placed on the safety performance, energy density and industrial requirements of battery cells.

At present, an internal structure of the battery cell is not compact enough, resulting in a large external dimension and a low energy density of the battery cell.

### Summary of the Invention

To this end, the present application provides a battery cell and a method and apparatus for manufacturing same, a battery and a power consuming device, having a compact structure and a good energy density.

In a first aspect, an embodiment of the present application provides a battery cell, including: a shell having an opening; an electrode assembly arranged inside the shell; and an end cap assembly, including an end cap, a first insulating member and a second insulating member, where the end cap is configured to cover the opening, the first insulating member is arranged between the electrode assembly and the end cap, so as to insulate and isolate the electrode assembly from the end cap, the second insulating member includes a main body portion and a first flanging portion, the first flanging portion is connected to one end of the main body portion, the main body portion is arranged between the shell and the electrode assembly, so as to insulate and isolate the shell from the electrode assembly, and the first flanging portion is connected to a side of the first insulating member facing the end cap or a side of the first insulating member away from the end cap.

In the battery cell of an embodiment of the present application, the first flanging portion of the second insulating member is connected to the side of the first insulating member facing the end cap or the side of the first insulating member away from the end cap. On the one hand, the side of the first insulating member facing the end cap or the side of the first insulating member away from the end cap has a sufficient area to connect with the first flanging portion, which can ensure the connection reliability of the first insulating member and the first flanging portion; and on the other hand, there is no need to reserve an area required to connect with the first flanging portion at a side surface of the first insulating member, and the thickness of the first insulating member is allowed to be further reduced, so that the battery cell is compact and has a good energy density.

According to some embodiments of the present application, the first flanging portion is hot-melted to the side of the first insulating member facing the end cap or the side of the first insulating member away from the end cap.

By means of this arrangement, the surface on the side of the first insulating member facing the end cap or the side of the first insulating member away from the end cap has an area greater than that of other surfaces, which can meet the minimum area required by a hot-melt process, and realize a reliable hot-melt connection between the first flanging portion and the first insulating member.

According to some embodiments of the present application, a groove is provided at the side of the first insulating member facing the end cap or the side of the first insulating member away from the end cap, the groove is located at an edge of the first insulating member, the groove is configured to accommodate the first flanging portion, and the first flanging portion is connected to a surface of the groove.

By means of this arrangement, the first flanging portion is accommodated inside the groove and is connected to the surface of the groove, which can reduce the degree of increase in the overall size of the battery cell caused by the stacking of the first flanging portion and the first insulating member, thereby improving the energy density of the battery cell.

According to some embodiments of the present application, the shape of the groove matches the shape of the first flanging portion.

By means of this arrangement, the shape of the groove matches the shape of the first flanging portion, which can reduce the area occupied by the groove on the surface on the side of the first insulating member facing the end cap or the side of the first insulating member away from the end cap. Thus, on the basis of accommodating the first flanging portion, the structural strength of the first insulating member will not be reduced too much, and the relative position of the first flanging portion and the first insulating member is limited when the first flanging portion and the first insulating member are connected, thereby simplifying a connection process between the first flanging portion and the first insulating member.

According to some embodiments of the present application, a depth of the groove is equal to a thickness of the first flanging portion.

By means of this arrangement, the first flanging portion is inserted between the first insulating member and the end cap, or inserted between the first insulating member and the electrode assembly, which does not additionally increase an outer size of the battery cell, so that the battery cell maintains the original energy density.

According to some embodiments of the present application, a width of the first flanging portion is less than that of the main body portion.

By means of this arrangement, it is conducive to limiting the relative position of the first flanging portion and the first insulating member when the first flanging portion is connected to the first insulating member, thereby simplifying the connection process between the first flanging portion and the first insulating member, reducing the area occupied by the groove on the surface of the first insulating member, and enhancing the strength of the first insulating member.

According to some embodiments of the present application, the second insulating member includes a plurality of first flanging portions, and the plurality of first flanging portions are arranged at intervals along a width direction of the main body portion.

By means of this arrangement, the plurality of first flanging portions are respectively connected to the first insulating member, and in the case of the same connection area, the material consumption of the second insulating member may be reduced, thereby lowering the manufacturing cost of the battery cell.

According to some embodiments of the present application, a plurality of second insulating members are provided, the plurality of second insulating members are distributed along the circumference of the electrode assembly, and the main body portions of two adjacent second insulating members are assembled with each other.

By means of this arrangement, the first flanging portion of each second insulating member may be connected to the first insulating member, then the main body portion of each second insulating member is assembled, and the plurality of main body portions jointly insulate and isolate the electrode assembly from the shell, thereby simplifying an assembly process of the battery cell.

According to some embodiments of the present application, the first insulating member is rectangular, four second insulating members are provided, and the first flanging portions of the four second insulating members are correspondingly connected to four edges of the first insulating member.

By means of this arrangement, one edge of the first insulating member corresponds to one second insulating member, a joint of main body portions of adjacent second insulating members corresponds to an end angle of the first insulating member, which can simplify the assembly process of the battery cell.

According to some embodiments of the present application, the shell includes a bottom wall and a side wall, the side wall is arranged around the bottom wall, the main body portion is arranged between the electrode assembly and the side wall, the second insulating member further includes a second flanging portion, the second flanging portion is connected to the other end of the main body portion, and the second flanging portion is arranged between the bottom wall and the electrode assembly.

By means of this arrangement, the second insulating member is provided with a second flanging portion, and the second flanging portion insulates and isolates the bottom wall from the electrode assembly, to prevent the electrode assembly and the bottom wall from being short-circuited, thereby improving the safety performance of the battery cell.

According to some embodiments of the present application, the second flanging portions of the plurality of second insulating members jointly cover a side of the electrode assembly facing the bottom wall.

By means of this arrangement, the main body portions of the plurality of second insulating members can be assembled first to jointly achieve circumferential insulation and isolation, and then the second flanging portions of the plurality of second insulating members cover the side of the electrode assembly facing the bottom wall in the form of assembling or at least partially stacking, thereby simplifying an assembly process of using the second insulating member to cover the electrode assembly.

According to some embodiments of the present application, the battery cell further includes: a binder configured to attach and fix the second flanging portions of the plurality of second insulating members.

By means of this arrangement, the relative positions of the second flanging portions of the plurality of second insulating members may be fixed, to prevent the second flanging portions from being upwarped to expose the surface of the electrode assembly, causing the electrode assembly to be short-circuited with the bottom wall, and resulting in a potential safety hazard.

In a second aspect, an embodiment of the present application provides a battery, including a battery cell according to an embodiment in the first aspect of the present application.

Due to characteristics of the battery cell according to an embodiment in the first aspect of the present application, the battery according to an embodiment in the second aspect of the present application also has the advantages of a compact structure and a good energy density.

In a third aspect, an embodiment of the present application provides a power consuming device, including a battery according to the embodiment in the second aspect of the present application, the battery being configured to provide electric energy.

Due to characteristics of the battery cell according to an embodiment in the first aspect of the present application, the power consuming device according to an embodiment in the third aspect of the present application also has the advantages of a compact structure and a good energy density.

In a fourth aspect, an embodiment of the present application provides a method for manufacturing a battery cell, including:
providing a shell provided with an opening;
providing an electrode assembly;
providing an end cap assembly, the end cap assembly including an end cap, a first insulating member and a second insulating member, where the first insulating member is arranged between the electrode assembly and the end cap, so as to insulate and isolate the electrode assembly from the end cap, the second insulating member includes a main body portion and a first flanging portion, the first flanging portion is connected to one end of the main body portion, and the first flanging portion is connected to a side of the first insulating member facing the end cap or a side of the first insulating member away from the end cap; and
covering the electrode assembly with the main body portion, placing the electrode assembly inside the shell, using the second insulating member to insulate and isolate the shell from the electrode assembly, and covering the opening with the end cap to enclose the electrode assembly inside the shell.

In a fourth aspect, an embodiment of the present application provides an apparatus for manufacturing a battery cell, including:
a first provision device configured to provide a shell provided with an opening;
a second provision device configured to provide an electrode assembly;
a third provision device configured to provide an end cap assembly, the end cap assembly including an end cap, a first insulating member and a second insulating member, where the first insulating member is arranged between the electrode assembly and the end cap, so as to insulate and isolate the electrode assembly from the end cap, the second insulating member includes a main body portion and a first flanging portion, the first flanging portion is connected to one end of the main body portion, and the first flanging portion is connected to a side of the first insulating member facing the end cap or a side of the first insulating member away from the end cap; and
an assembly module configured to cover the electrode assembly with the main body portion, place the electrode assembly inside the shell, use the second insulating member to insulate and isolate the shell from the electrode assembly, and cover the opening with the end cap to enclose the electrode assembly inside the shell.

Some of the additional aspects and advantages of the present application will be set forth in the following description, and some will become apparent from the following description, or be learned by practice of the present application.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any inventive effort.
FIG. 1 is a simplified schematic diagram of a vehicle according to an embodiment of the present application;
FIG. 2 is a schematic structural diagram of a battery of the vehicle in FIG. 1;
FIG. 3 is an exploded view of a battery cell according to some embodiments of the present application;
FIG. 4 is a schematic structural diagram of the battery cell in FIG. 3 from one perspective (a shell is not shown);
FIG. 5 and FIG. 6 are schematic structural diagrams of an end cap assembly in the battery cell according to some embodiments of the present application from two perspectives;
FIG. 7 and FIG. 8 are schematic structural diagrams of two connecting forms of a first flanging portion and a first insulating member in the battery cell according to some embodiments of the present application;
FIG. 9 is a schematic structural diagram of the end cap assembly in FIG. 8 where the first insulating member is assembled with an end cap;
FIG. 10 and FIG. 11 are schematic diagrams of assembling a plurality of second insulating members in the battery cell according to some embodiments of the present application from two perspectives;
FIG. 12 is a schematic structural diagram of the battery cell according to some embodiments of the present application from another perspective (the shell is not shown);
FIG. 13 is a schematic structural diagram of using a binder to attach and fix a second flanging portion in the battery cell according to some embodiments of the present application (the shell is not shown);
FIG. 14 is a schematic diagram of a method for manufacturing a battery cell according to some embodiments of the present application; and
FIG. 15 is a schematic diagram of an apparatus for manufacturing a battery cell according to some embodiments of the present application.

The foregoing drawings are not drawn to scale.

List of reference signs: 1000 - Vehicle; 100 - Battery; 10 - Battery cell; 11 - Shell; 111 - Bottom wall; 112 - Side wall; 12 - End cap assembly; 121 - End cap; 122 - Electrode terminal; 123 - First insulating member; 1231 - First surface; 1232 - Second surface; 1233 - Third surface; 1234 - Groove; 12341 - Fourth surface; 12342 - Fifth surface; 1235 - First edge; 1236 - Second edge; 1237 - Third edge; 1238 - Fourth edge; 124 - Second insulating member; 1241 - Main body portion; 12411 - First end; 12412 - Second end; 12413 - Third end; 12414 - Fourth end; 1242 - First flanging portion; 1243 - Second flanging portion; 13 - Electrode assembly; 131 - Body; 1311 - Bottom surface; 1312 - Top surface; 1313 - Side surface; 132 - First tab; 133 - Second tab; 14 - Current collecting member; 15 - Binder; 20 - Case; 21 - First case; 22 - Second case; 200 - Controller; 300 - Motor; 2000 - Apparatus for manufacturing a battery cell; 2100 - First provision device; 2200 - Second provision device; 2300 - Third provision device; 2400 - Assembly module.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without involving any inventive effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising/including", "provided with", and any variations thereof in the description and claims, as well as the brief description of the drawings described above of the present application are intended to cover non-exclusive inclusions. The terms "first", "second", etc. in the specification and the claims of the present application and in the foregoing drawings are used to distinguish different objects, rather than describing a specific order or a primary-secondary relationship.

In the present application, the phrase "embodiment" mentioned means that the specific features, structures, or characteristics described with reference to the embodiments can be encompassed in at least one embodiment of the present application. The phrase at various locations in the description does not necessarily refer to the same embodiment, or an independent or alternative embodiment exclusive of another embodiment. Those skilled in the art should understand explicitly or implicitly that the embodiments described in the present application can be combined with other embodiments.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The phrase "a plurality of" appearing in the present application means two or more (including two).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which will not be limited in the embodiments of the present application. The battery cell may be cylindrical, flat, cuboid or in another shape, which will not be limited by the embodiments of the present application. The battery cells are generally classified into three types depending on the way of package: cylindrical battery cells, prismatic battery cells and pouch battery cells.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting the charging or discharging of the battery cells.

The battery cell includes an electrode assembly and an electrolyte solution. The electrode assembly is composed of a positive electrode plate, a negative electrode plate and a separator. The battery cell operates mainly by relying on movements of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode plate includes a negative electrode current collector and a negative electrode active material layer. A surface of the negative electrode current collector is coated with the negative electrode active material layer, the negative electrode current collector that is not coated with the negative electrode active material layer protrudes from the negative electrode current collector coated with the negative electrode active material layer, and the negative electrode current collector that is not coated with the negative electrode active material layer is used as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP) or polyethylene (PE), etc. In addition, the electrode assembly may be of a wound structure or a laminated structure, which will not be limited in the embodiments of the present application.

The battery cell further includes a current collecting member, the current collecting member being configured for electrically connecting the tab and an electrode terminal of the battery cell, so as to convey electric energy from the electrode assembly to the electrode terminal, and to the outside of the battery cell via the electrode terminal. The plurality of battery cells are electrically connected to one another through a busbar component, so that the plurality of battery cells are connected in series, in parallel or in series-parallel.

In the related art, in the process of assembling the battery cell, it is necessary to insulate and isolate the electrode assembly from the shell inside the battery cell to avoid the electrode assembly and the shell from contacting each other and causing a short circuit inside the battery cell. A commonly used insulation method is to use a lower plastic to insulate and isolate the electrode assembly from the end cap, use an insulating film to cover the electrode assembly, hot-melt the insulating film and the lower plastic to fix the position of the insulating film, and then place the electrode assembly covered with the insulating film into the interior of the shell. The insulating film is arranged between the electrode assembly and an inner wall of the shell to achieve insulation and isolation between the electrode assembly and the shell, thereby ensuring the safety performance of the battery cell.

The inventor has discovered through research that in the above-mentioned insulation method, the insulating film is used to cover the electrode assembly only after the electrode assembly, the lower plastic and the end cap have been assembled into one unit. Since the side of the lower plastic facing the end cap is attached to the end cap, and the side of the lower plastic away from the end cap is attached to the electrode assembly, only a side surface of the lower plastic (i.e., a side surface of the lower plastic extending circumferentially around a thickness direction) can be used to connect with the insulating film. In order to ensure the reliability of connection between the lower plastic and the insulating film, it is necessary to leave a sufficient connection area on the side surface of the lower plastic, which often leads to an increase in the thickness of the lower plastic, and then an increase in an outer dimension of the battery cell, a less compact structure, and a lower energy density.

Based on the above ideas, this application proposes a new technical solution, which connects the lower plastic to the insulating film before the end cap, the lower plastic and the electrode assembly are assembled, and uses the side of the insulating film facing or away from the end cap to connect to the insulating film, allowing the thickness of the lower plastic to be further reduced, so that the battery cell has a compact structure and a higher energy density.

It is to be understood that the battery cells described in the embodiments of the present application may directly supply power to a power consuming device, or are connected in parallel or in series to form a battery module or a battery, so as to supply power to various power consuming devices in the form of the battery module or the battery.

It is to be understood that the power consuming device described in the embodiments of the present application, using the battery cells, battery modules, or applicable to batteries may be in various forms, for example, a mobile phone, a portable apparatus, a laptop, an electric motorcycle, an electric vehicle, a ship, a spacecraft, an electric toy, an electric tool, etc. For example, the spacecraft includes an airplane, a rocket, a space shuttle, a spaceship, etc. The electric toy includes a fixed or mobile electric toy, such as a game console, an electric vehicle toy, an electric ship toy, an electric airplane toy, etc. The electric tool includes an electric tool for metal cutting, an electric tool for grinding, an electric tool for assembling, an electric tool for railways, etc., such as an electric drill, an electric grinder, an electric wrench, an electric screwdriver, an electric hammer, an electric impact drill, a concrete vibrator, and an electric planer.

The battery cells, the battery modules or the batteries described in the embodiments of the present application are not only applicable to the power consuming device described above, but also applicable to all power consuming devices using the battery cells, the battery modules and the batteries. However, in order to make the description concise, all the following embodiments will be described with an electric vehicle as an example.

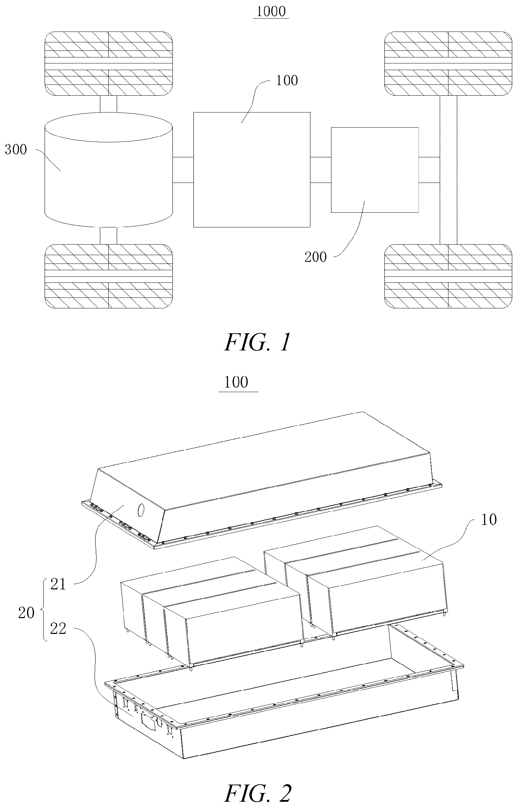

FIG. 1 shows a simple schematic diagram of a vehicle according to an embodiment of the present application, and FIG. 2 shows a schematic structural diagram of a battery in the vehicle in FIG. 1.

As shown in FIG. 1, a vehicle 1000 is internally provided with a battery 100, a controller 200, and a motor 300. For example, the battery 100 may be arranged at the bottom, the front, or the rear of the vehicle 1000. The vehicle 1000 may be a fuel vehicle, a gas vehicle or a new energy vehicle. The new energy vehicle may be a battery electric vehicle, a hybrid electric vehicle, an extended-range vehicle, etc.

In some embodiments of the present application, the battery 100 may be configured for supplying electric energy to the vehicle 1000. For example, the battery 100 may be used as a power source for operating the vehicle 1000. The controller 200 is configured for controlling the battery 100 to supply electric energy to the motor 300, for example, for meeting the working power requirements during starting, navigating, and traveling of the vehicle 1000.

In other embodiments, the battery 100 may not only serve as the power source for operating the vehicle 1000, but may also serve as a power source for driving the vehicle 1000, replacing or partially replacing fuel or natural gas, to provide driving power for the vehicle 1000.

The battery 100 mentioned in this embodiment of the present application is a single physical module that includes one or more battery cells 10 for providing a higher voltage and capacity. The plurality of battery cells 10 may be connected in series, in parallel, or in series-parallel to directly form the battery 100, where connection in series-parallel means that the plurality of battery cells 10 are connected both in series and in parallel. The plurality of battery cells 10 may be connected in series, in parallel, or in series-parallel to form a battery module first, and then a plurality of battery modules are connected in series, in parallel, or in series-parallel to form the battery 100.

As shown in FIG. 2, the battery 100 includes a plurality of battery cells 10 and a case 20, where the plurality of battery cells 10 are placed in the case 20. The case 20 includes a first case 21 and a second case 22, where the first case 21 and the second case 22 are fitted to each other in a covered manner to form a battery 100 cavity, and a plurality of battery 100 modules are placed in the battery 100 cavity. The first case 21 and the second case 22 may be shaped depending on the shape of a combination of the plurality of battery 100 modules, and each of the first case 21 and the second case 22 may have an opening. For example, each of the first case 21 and the second case 22 may be a hollow cuboid and has only one side with an opening, the opening of the first case 21 and the opening of the second case 22 are provided opposite each other, and the first case 21 and the second case 22 are snap-fitted to each other to form the case 20 having a closed cavity. The plurality of battery cells 10 are connected to each other in parallel or in series or in series-parallel before being placed in the case 20 formed by snap-fitting the first case 21 and the second case 22.

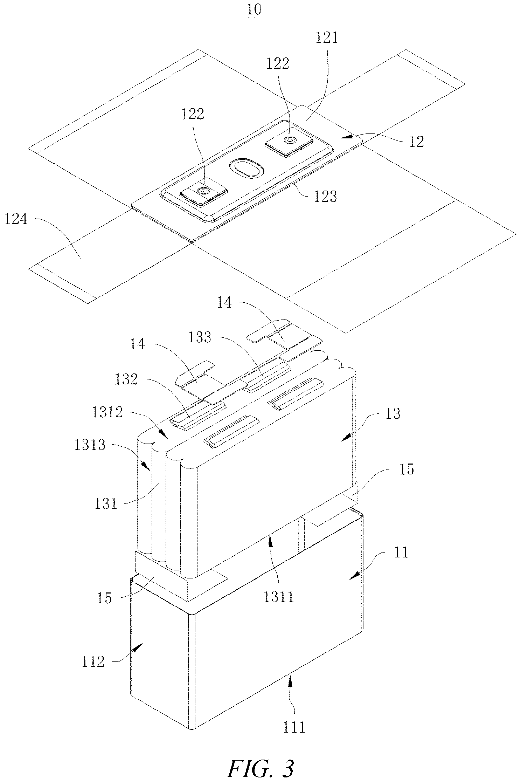

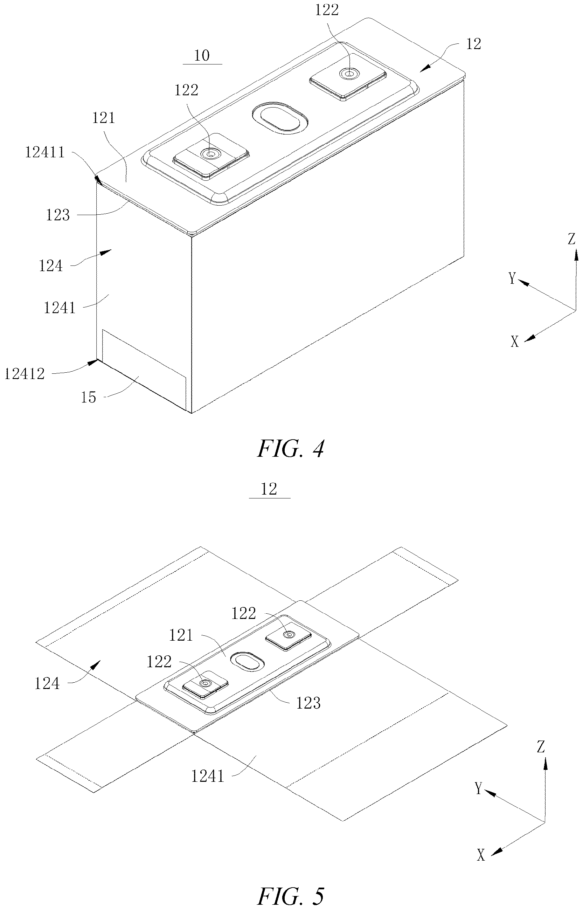

FIG. 3 is an exploded view of a battery cell according to some embodiments of the present application; and FIG. 4 is a schematic structural diagram of the battery cell in FIG. 3 from one perspective (a shell is not shown);

As shown in FIG. 3 and FIG. 4, the battery cell 10 includes a shell 11, an end cap assembly 12, an electrode assembly 13 and a current collecting member 14.

The shell 11 includes a bottom wall 111 and a side wall 112, the side wall 112 is arranged around the bottom wall 111, one end of the side wall 112 is connected to the bottom wall 111, and the other end of the side wall forms an opening. The end cap assembly 12 includes an end cap 121, an electrode terminal 122 and a first insulating member 123. The end cap 121 covers the opening, so that the electrode assembly 13 is enclosed inside the shell. The end cap 121 is provided with two electrode leading-out holes, two electrode terminals 122 are provided, the electrode terminals 122 correspond to the electrode leading-out holes one by one, and the electrode terminals 122 are mounted in the corresponding electrode leading-out holes.

The shell 11 may be made of a metal material, such as aluminum, an aluminum alloy, or nickel-plated steel. The end cap 121 is of a plate-like structure. The end cap 121 matches an opening of the shell 11 in shape and size, and the end cap 121 is fixed to the opening of the shell 11, so as to enclose the electrode assembly 13 and an electrolyte solution in an accommodating cavity of the shell 11. The end cap 121 is made of a metal material, for example, aluminum, steel, or the like.

The electrode assembly 13 is disposed in the shell 11, and the electrode assembly 13 includes a body 131, a first tab 132 and a second tab 133. The body 131 includes a positive electrode plate, a negative electrode plate, and a separator, where the separator is located between the positive electrode plate and the negative electrode plate for separating the positive electrode plate from the negative electrode plate. The first tab 132 and the second tab 133 have opposite polarities, the first tab 132 is connected to one electrode terminal 122 through one current collecting member 14, and the second tab 133 is connected to another electrode terminal 122 through another current collecting member 14. In the first tab 132 and the second tab 133, the first tab 132 is a positive electrode tab, the second tab 133 is a negative electrode tab, the current collecting member 14 corresponding to the first tab 132 is made of aluminum, and the current collecting member 14 corresponding to the second tab 133 is made of copper.

The first insulating member 123 may be a plastic member, or a silicone member or a plastic member. In some embodiments of the present application, the first insulation is lower plastic, which further insulates and isolates the end cap 121 and the current collecting member 14 on the basis of insulating and isolating the electrode assembly 13 and the end cap 121, so as to prevent the current collecting member 14 from contacting the end cap 121 and causing a short circuit inside the battery cell 10. In other embodiments, the first insulating member 123 may also refer to a component that has the function of isolating the electrode assembly 13 and the end cap 121 in combination with other purposes, which is not further limited herein.

As shown in FIG. 3 and FIG. 4, in some embodiments of the present application, the shell 11 is in the hexahedral shape, and the shell 11 has a length direction extending in a first direction X, a width direction extending in a second direction Y, and a height direction extending in a third direction Z. The electrode assembly 13 is an elliptical body or a hexahedron, and a length direction, a width direction and a height direction of the electrode assembly 13 are arranged corresponding to the shell 11. The end cap 121 has a rectangular plate-like structure, and the end cap 121 has a length direction extending in the first direction X, a width direction extending in the second direction Y, and a thickness direction extending in the third direction Z. The first insulating member 123 has a rectangular plate-like structure, and the first insulating member 123 has a length direction extending in the first direction X, a width direction extending in the second direction Y, and a thickness direction extending in the third direction Z.

In other embodiments, the shell 11 may also be a cylinder or an elliptical cylinder, the end cap 121 has a circular or elliptical plate-shaped structure, and the first insulating member 123 has a circular or elliptical plate-shaped structure.

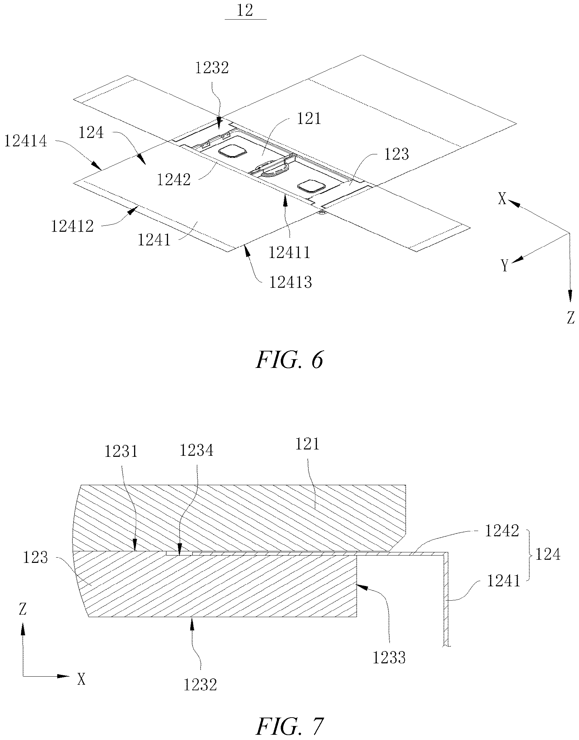

FIG. 5 and FIG. 6 are schematic structural diagrams of an end cap assembly in the battery cell according to some embodiments of the present application from two perspectives.

As shown in FIG. 3, FIG. 4, FIG. 5 and FIG. 6, some embodiments of the present application provide a battery cell 10, including a shell 11, an electrode assembly 13 and an end cap assembly 12. The shell 11 has an opening, and the electrode assembly 13 is disposed in the shell 11. The end cap assembly 12 includes an end cap 121, a first insulating member 123 and a second insulating member 124, where the end cap 121 is configured to cover the opening, and the first insulating member 123 is arranged between the electrode assembly 13 and the end cap 121, so as to insulate and isolate the electrode assembly 13 from the end cap 121. As shown in FIG. 5 and FIG. 6, the second insulating member 124 includes a main body portion 1241 and a first flanging portion 1242, where the first flanging portion 1242 is connected to one end of the main body portion 1241, the main body portion 1241 is arranged between the shell 11 and the electrode assembly 13, so as to insulate and isolate the shell 11 from the electrode assembly 13, and the first flanging portion 1242 is connected to one side of the first insulating member 123 facing the end cap 121 or away from the end cap 121.

The second insulating member 124 may be made of a sheet material, or a film-like material; may be made of a soft material, or a hard material; and may be a plastic member, or a silicone member or a plastic member. In some embodiments of the present application, the second insulating member 124 is a Mylar film. In other embodiments, the second insulating member 124 may also be a plastic insulating sheet.

The main body portion 1241 and the first flanging portion 1242 may be of an integrally formed structure, and the main body portion 1241 and the first flanging portion 1242 may also be two components that are separately provided and connected to each other.

As shown in FIG. 5 and FIG. 6, in some embodiments of the present application, the main body portion 1241 and the first flanging portion 1242 are an integrally formed Mylar film, the main body portion 1241 and the first flanging portion 1242 are connected with a crease formed therebetween, the main body portion 1241 and the first flanging portion 1242 are bent after the end cap assembly 12 and the electrode assembly 13 are integrally assembled, so that the main body portion 1241 insulates and isolates the electrode assembly 13 from the shell 11.

In other embodiments, the main body portion 1241 and the first flanging portion 1242 may also be separately provided, the first flanging portion 1242 is bonded or hot-melted to the main body portion 1241, and the first flanging portion 1242 and the main body portion 1241 may be connected as a whole before the first flanging portion 1242 and the first insulating member 123 are assembled, or may be connected as a whole after the first flanging portion 1242 and the first insulating member 123 are assembled.

As shown in FIG. 3, the body 131 of the electrode assembly 13 includes a bottom surface 1311, a top surface 1312 and a side surface 1313, where the bottom surface 1311 and the top surface 1312 are arranged opposite each other in a third direction Z, and the side surface 1313 connects the bottom surface 1311 and the top surface 1312 and extends circumferentially around the third direction Z.

As shown in FIG. 4, in the third direction Z, opposite ends of the main body portion 1241 are respectively a first end 12411 and a second end 12412, the first end 12411 of the main body portion 1241 is an end close to the end cap 121, the second end 12412 is an end away from the end cap 121, the first end 12411 is connected to the first flanging portion 1242, and the second end 12412 extends to the bottom surface 1311 of the electrode assembly 13 (referring to FIG. 3).

One second insulating member 124 may be provided, and the first flanging portion 1242 of the second insulating member 124 is connected to the first insulating member 123. The main body portion 1241 is arranged circumferentially around the electrode assembly 13 and covers a surface of the electrode assembly 13. A plurality of second insulating members 124 may also be provided, and the plurality of second insulating members 124 are arranged around the electrode assembly 13 in the third direction Z, so as to cover the surface of the electrode assembly 13 in the third direction Z.

In a plane (i.e. an XY plane) perpendicular to the third direction Z, the first flanging portion 1242 may completely cover the first insulating member 123, or may extend inward from an edge of the first insulating member 123 and partially cover the first insulating member 123.

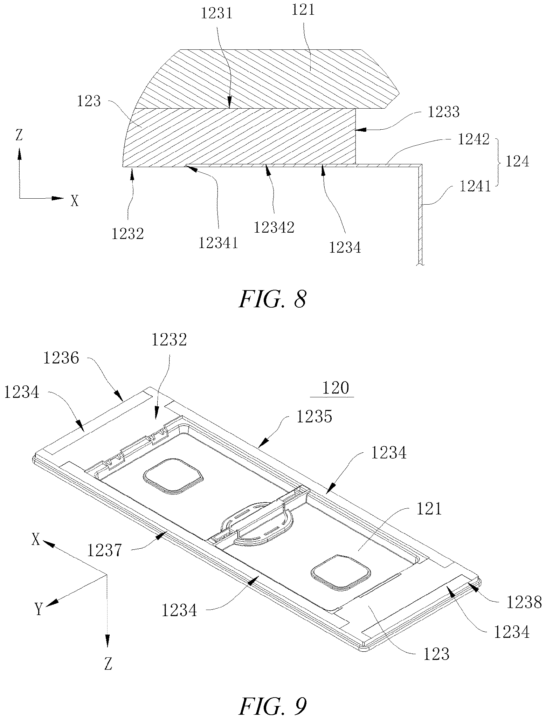

FIG. 7 and FIG. 8 are schematic structural diagrams of two connecting forms of a first flanging portion and a first insulating member in the battery cell according to some embodiments of the present application.

As shown in FIG. 7 and FIG. 8, the thickness direction of the first insulating member 123 extends in the third direction Z. In the third direction Z, the surface of the first insulating member 123 facing the end cap 121 is a first surface 1231, the surface of the first insulating member away from the end cap 121 is a second surface 1232, the surface around the third direction Z is a third surface 1233, and the third surface 1233 connects the first surface 1231 and the second surface 1232.

As shown in FIG. 7, in some embodiments of the present application, the first flanging portion 1242 may be arranged between the first insulating member 123 and the end cap 121 and is connected to the first surface 1231. As shown in FIG. 8, in some other embodiments of the present application, the first flanging portion 1242 may be arranged between the first insulating member 123 and the top surface 1312 of the electrode assembly 13 (referring to FIG. 3) and is connected to the second surface 1232. The first surface 1231 or the second surface 1232 may be provided with a groove 1234 or a positioning protrusion corresponding to the first flanging portion 1242; and may also be a smooth surface.

In the battery cell 10 of an embodiment of the present application, the first flanging portion 1242 of the second insulating member 124 is connected to the first surface 1231 or the second surface 1232 of the first insulating member 123. On the one hand, the first surface 1231 of the first insulating member 123 has a sufficient area to connect with the first flanging portion 1242, so as to ensure the connection reliability of the first insulating member 123 and the first flanging portion 1242; and on the other hand, the first flanging portion 1242 of the second insulating member 124 is connected to the first surface 1231 or the second surface 1232 of the first insulating member 123, there is no need to reserve an area required to connect with the first flanging portion 1242 at the third surface 1233 of the first insulating member 123, and the thickness of the first insulating member 123 is allowed to be further reduced, so that the battery cell 10 is compact and has a good energy density.

In some embodiments of the present application, the first flanging portion 1242 is hot-melted to a side of the first insulating member 123 facing the end cap 121 or a side of the first insulating member away from the end cap 121.

Specifically, the first flanging portion 1242 is hot-melted to the first surface 1231 or the second surface 1232 of the first insulating member 123.

The first flanging portion 1242 may be connected to the first surface 1231 or the second surface 1232 of the first insulating member 123 by a hot melting point arranged at the center of the length direction of the first flanging portion 1242. The first flanging portion 1242 may be connected to the first surface 1231 or the second surface 1232 of the first insulating member 123 by a plurality of hot melting points arranged at intervals along the length direction of the first flanging portion 1242.

In the above solution, the first surface 1231 or the second surface 1232 of the first insulating member 123 has an area greater than that of the third surface 1233, which can meet the minimum area required by a hot-melt process, and realize a reliable hot-melt connection between the first flanging portion 1242 and the first insulating member 123.

As shown in FIG. 7 and FIG. 8, in some embodiments of the present application, a groove 1234 is provided at the side of the first insulating member 123 facing the end cap 121 or the side of the first insulating member away from the end cap 121, the groove 1234 is located at the edge of the first insulating member 123, the groove 1234 is configured to accommodate the first flanging portion 1242, and the first flanging portion 1242 is connected to a surface of the groove 1234.

The groove 1234 is provided at a side of the first insulating member 123 close to the first flanging portion 1242, so as to accommodate the first flanging portion 1242.

FIG. 9 is a schematic structural diagram of the end cap assembly in FIG. 8 where the first insulating member is assembled with the end cap.

As shown in FIG. 9, taking the connection of the first insulating member 123 and the second surface 1232 as an example, the groove 1234 is formed by being recessed on the second surface 1232, the groove 1234 extends to the edge of the first insulating member 123, and the first flanging portion 1242 is inserted into the groove 1234 from the edge of the first insulating member 123, and is hot-melted to the surface of the groove 1234. It is to be understood that the edge of the first insulating member 123 refers to an outer contour of the first insulating member 123 along the XY plane.

The number and arrangement position of the grooves 1234 may be provided in one-to-one correspondence with the number and arrangement position of the first flanging portion 1242 of the first insulating member 123. In some embodiments of the present application, as shown in FIG. 9, according to the previous implementation that "the first insulating member 123 includes a plurality of first flanging portions 1242", a plurality of grooves 1234 may also be provided, the first flanging portions 1242 are arranged corresponding to the grooves 1234, and one first flanging portion 1242 is arranged in one groove 1234. In other embodiments, one groove 1234 may also be provided, and a plurality of first flanging portions 1242 are jointly accommodated in the same groove 1234, to simplify the construction of the first insulating member 123.

In the above solution, the first flanging portion 1242 is accommodated inside the groove 1234 and is connected to the surface of the groove 1234, which can reduce the degree of increase in the overall size of the battery cell 10 caused by the stacking of the first flanging portion 1242 and the first insulating member 123, thereby improving the energy density of the battery cell 10.

In some embodiments of the present application, the shape of the groove 1234 matches the shape of the first flanging portion 1242.

Specifically, as shown in FIG. 8 and FIG. 9, as an example, the groove 1234 is arranged on the second surface 1232 of the first insulating member 123, the groove 1234 includes a fourth surface 12341 and a fifth surface 12342, a side of the fourth surface 12341 is connected to the fifth surface 12342, the other side extends to the edge of the first insulating member 123 and is connected to the third surface 1233, and a side of the fifth surface 12342 away from the fourth surface 12341 is connected to the first surface 1231. When the first flanging portion 1242 is accommodated in the groove 1234, the edge of the first flanging portion 1242 abuts against the fifth surface 12342 of the groove 1234.

In the above solution, the shape of the groove 1234 matches the shape of the first flanging portion 1242, which can reduce the area occupied by the groove 1234 on the first surface 1231 or the second surface 1232 of the first insulating member 123. Thus, on the basis of accommodating the first flanging portion 1242, the structural strength of the first insulating member 123 will not be reduced too much, and the relative position of the first flanging portion 1242 and the first insulating member 123 is limited when the first flanging portion 1242 and the first insulating member 123 are connected, thereby simplifying a connection process between the first flanging portion 1242 and the first insulating member 123.

In some embodiments of the present application, the depth of the groove 1234 is equal to the thickness of the first flanging portion 1242.

If the first flanging portion 1242 is connected to the first insulating member 123, the thickness direction of the first flanging portion 1242 extends in the third direction Z, and the depth of the groove 1234 also extends in the third direction Z.

In other embodiments, the depth of the groove 1234 may also be less than the thickness of the first flanging portion 1242, part of the first flanging portion 1242 is accommodated inside the groove 1234, and part of the first flanging portion protrudes from the first surface 1231 or the second surface 1232.

In the above solution, the first flanging portion 1242 is inserted between the first insulating member 123 and the end cap 121, or inserted between the first insulating member 123 and the electrode assembly 13, which does not additionally increase an outer size of the battery cell 10, so that the battery cell 10 maintains the original energy density.

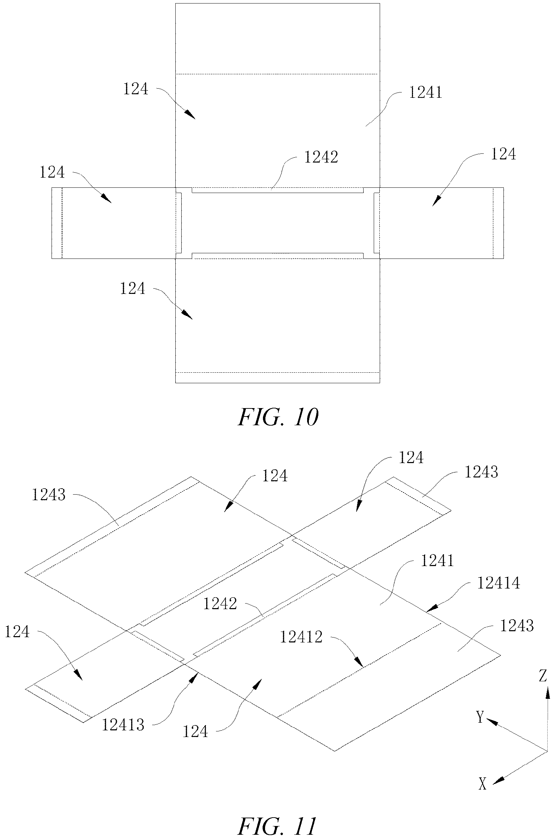

FIG. 10 and FIG. 11 are schematic diagrams of assembling a plurality of second insulating members in the battery cell according to some embodiments of the present application from two perspectives.

As shown in FIG. 10 and FIG. 11, in some embodiments of the present application, the width of the first flanging portion 1242 is less than the width of the main body portion 1241.

For the second insulating member 124, the width of the second insulating member 124 is an outer size of the second insulating member 124 around the circumference of the electrode assembly 13. Around the circumference of the electrode assembly 13, opposite ends of the second insulating member 124 are respectively a third end 12413 and a fourth end 12414, the width of the main body portion 1241 refers to a spacing between the third end 12413 and the fourth end 12414 of the second insulating member 124, and the width of the first flanging portion 1242 refers to an extension length of the first flanging portion 1242 along the direction around the circumference of the electrode assembly 13.

There are various implementations in which the width of the first flanging portion 1242 is less than the width of the main body portion 1241. For example, as shown in FIG. 11, in the width direction of the second insulating member 124, two ends of the first flanging portion 1242 are respectively located on an inner side of the third end 12413 and the fourth end 12414 of the main body portion 1241; as another example, in the width direction of the second insulating member 124, one end of the first flanging portion 1242 is located on a side of the third end 12413 close to the fourth end 12414, the other end is located on a side of the fourth end 12414 away from the third end 12413, and the spacing between one end of the first flanging portion 1242 and the third end 12413 is greater than the spacing between the other end and the fourth end 12414; and as another example, two ends of the first flanging portion 1242 are both located on the same side of the third end 12413 and the fourth end 12414 of the main body portion 1241, and the spacing between one end of the first flanging portion 1242 and the third end 12413 is greater than the spacing between the other end and the fourth end 12414.

In the above solution, it is conducive to limiting the relative position of the first flanging portion 1242 and the first insulating member 123 when the first flanging portion 1242 is connected to the first insulating member 123, thereby simplifying the connection process between the first flanging portion 1242 and the first insulating member 123, reducing the area occupied by the groove 1234 on the surface of the first insulating member 123, and enhancing the strength of the first insulating member 123.

As shown in FIG. 11, in some embodiments of the present application, the second insulating member 124 includes a plurality of first flanging portions 1242, and the plurality of first flanging portions 1242 are arranged at intervals in the width direction of the main body portion 1241.

The width direction of the main body portion 1241 extends along the circumference of the electrode assembly 13, the plurality of first flanging portions 1242 may have the same size, the plurality of first flanging portions 1242 are arranged at equal intervals along the width direction of the main body portion 1241, and each first flanging portion 1242 is hot-melted to the first insulating member 123. The plurality of first flanging portions 1242 may have different sizes and intervals, to flexibly utilize the surface of the first insulating member 123 to provide the corresponding groove 1234.

In the above solution, the plurality of first flanging portions 1242 are respectively connected to the first insulating member 123, and in the case of the same connection area, the material consumption of the second insulating member 124 may be reduced, thereby lowering the manufacturing cost of the battery cell 10.

As shown in FIG. 9, FIG. 10 and FIG. 11, in some embodiments of the present application, a plurality of second insulating members 124 are provided, the plurality of second insulating members 124 are distributed along the circumference of the electrode assembly 13 (referring to FIG. 3), and main body portions 1241 of the adjacent second insulating members 124 are assembled to each other.

It is to be understood that assembling means that adjacent edges of the main body portions 1241 of the two second insulating members 124 are able to abut together to jointly cover a peripheral surface of the electrode assembly 13.

The plurality of second insulating members 124 may have the same width, or different widths. For example, when the shape of the first insulating member 123 is a circular or square plate-like structure, the plurality of second insulating members 124 may have the same width; and when the shape of the first insulating member 123 is a rectangular plate-like structure, the width of the second insulating member 124 can be flexibly set according to an edge profile of the first insulating member 123, so that the second insulating member is easy to assembly and can cover the peripheral surface of the electrode assembly 13.

In the above solution, the first flanging portion 1242 of each second insulating member 124 may be connected to the first insulating member 123, then the main body portion 1241 of each second insulating member 124 is assembled, and the plurality of main body portions 1241 jointly insulate and isolate the electrode assembly 13 from the shell 11, thereby simplifying an assembly process of the battery cell 10.

Referring to FIG. 9, FIG. 10 and FIG. 11, in some embodiments of the present application, the first insulating member 123 is rectangular, four second insulating members 124 are provided, and the first flanging portions 1242 of the four second insulating members 124 are correspondingly connected to four edges of the first insulating member 123.

Specifically, as shown in FIG. 9, four edges of the rectangular first insulating member 123 are respectively a first edge 1235, a second edge 1236, a third edge 1237 and a fourth edge 1238, where the first edge 1235 and the third edge 1237 are arranged opposite each other, the second edge 1236 and the fourth edge 1238 are arranged opposite each other, and each edge is arranged corresponding to one second insulating member 124.

As shown in FIG. 8 and FIG. 9, taking the second insulating member 124 corresponding to the first edge 1235 as an example, a groove 1234 is arranged at the first edge 1235 of the first insulating member 123, the first flanging portion 1242 of the second insulating member 124 extends into the groove 1234 and is accommodated inside the groove 1234, the main body portion 1241 covers part of the peripheral surface of the electrode assembly 13 corresponding to the first edge 1235, and the third end 12413 and the fourth end 12414 of the main body portion 1241 are respectively assembled with two main body portions 1241 of two adjacent second insulating members 124.

In the above solution, one edge of the first insulating member 123 corresponds to one second insulating member 124, which can simplify an assembly process of a square battery 100.

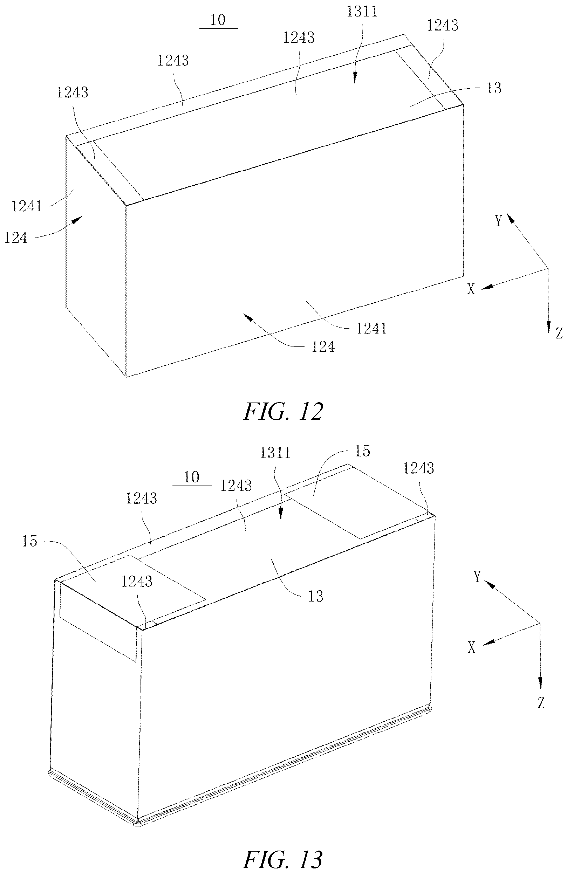

FIG. 12 is a schematic structural diagram of the battery cell according to some embodiments of the present application from another perspective (the shell is not shown).

As shown in FIG. 3, FIG. 11 and FIG. 12, in some embodiments of the present application, the shell 11 includes a bottom wall 111 and a side wall 112, where the side wall 112 is arranged around the bottom wall 111, the main body portion 1241 is arranged between the electrode assembly 13 and the side wall 112, the second insulating member 124 further includes a second flanging portion 1243, the second flanging portion 1243 is connected to the other end of the main body portion 1241, and the second flanging portion 1243 is arranged between the bottom wall 111 and the electrode assembly 13.

Specifically, the second flanging portion 1243 is connected to the second end 12412 of the main body portion 1241, and the second flanging portion 1243 is configured to insulate and isolate the bottom surface 1311 of the electrode assembly 13 from the bottom wall 111 of the shell 11.

The second flanging portion 1243 may be formed by bending the second end 12412 of the main body portion 1241, or may be provided separately from the main body portion 1241 and connected in the form of bonding or a hot-melt connection.

The second flanging portion 1243 may be directly attached to the bottom wall 111 of the shell 11, to insulate and isolate the bottom surface 1311 of the electrode assembly 13 from the bottom wall 111 of the shell 11; and a third insulating member (not shown in the figures) may also be further arranged between the second flanging portion 1243 and the bottom wall 111 of the shell 11, which further improves the reliability of insulation and isolation between the electrode assembly 13 and the bottom wall 111.

On the basis of the previous implementation that "a plurality of second insulating members 124 are provided", at least one of the plurality of second insulating members 124 is provided with a second flanging portion 1243. for example, one of the second insulating members 124 is provided with a second flanging portion 1243, the second flanging portion 1243 covers the bottom surface 1311 of the electrode assembly 13, and second ends 12412 of main body portions 1241 of other second insulating members 124 extend to the bottom surface 1311 of the electrode assembly 13 and is assembled with the second flanging portion 1243. As another example, two of the second insulating members 124 are each provided with a second flanging portion 1243, second flanging portions 1243 of the two second insulating members 124 jointly cover the bottom surface 1311 of the electrode assembly 13, and the second ends 12412 of the main body portions 1241 of the other second insulating members 124 extend to the bottom surface 1311 of the electrode assembly 13 and are assembled with the second flanging portions 1243. As another example, each second insulating member 124 is provided with a second flanging portion 1243, and a plurality of second flanging portions 1243 jointly cover the bottom surface 1311 of the electrode assembly 13.

In the above solution, the second insulating member 124 is provided with a second flanging portion 1243, and the second flanging portion 1243 insulates and isolates the bottom wall 111 from the electrode assembly 13, to prevent the electrode assembly 13 and the bottom wall 111 from being short-circuited, thereby improving the safety performance of the battery cell 10.

As shown in FIG. 12, in some embodiments of the present application, the second flanging portions 1243 of the plurality of second insulating members 124 jointly cover a side of the electrode assembly 13 facing the bottom wall 111.

For example, if four second insulating members 124 are provided, the second flanging portions 1243 of the four second insulating members 124 jointly cover the bottom surface 1311 of the electrode assembly 13.

The second flanging portions 1243 of the plurality of second insulating members 124 may cover the bottom surface 1311 of the electrode assembly 13 in an assembled manner, or may cover the bottom surface 1311 of the electrode assembly 13 in a way that the edges are partially stacked. The second flanging portions 1243 of the plurality of second insulating members 124 may have the same area, and the plurality of second flanging portions 1243 evenly cover the bottom surface 1311 of the electrode assembly 13; and the second flanging portions 1243 of the plurality of second insulating members 124 may also have different areas, one of the second flanging portions 1243 has the same area as that of the bottom surface 1311 of the electrode assembly 13, and the area of other second flanging portion 1243 is less than that of the bottom surface 1311 of the electrode assembly 13. A stacking area is provided between the plurality of second flanging portions 1243 to more reliably cover the bottom surface 1311 of the electrode assembly 13.

In the above solution, the second flanging portions 1243 of the plurality of second insulating members 124 are used to jointly insulate and isolate the bottom wall 111 from the electrode assembly 13, which can assemble the main body portions 1241 of the plurality of second insulating members 124 first to jointly achieve circumferential insulation and isolation, and then the second flanging portions 1243 of the plurality of second insulating members 124 cover the side of the electrode assembly 13 facing the bottom wall 111 in the form of assembling or at least partially stacking, thereby simplifying an assembly process of using the second insulating member 124 to cover the electrode assembly 13.

FIG. 13 is a schematic structural diagram of using a binder to attach and fix a second flanging portion in the battery cell according to some embodiments of the present application (the shell is not shown).

As shown in FIG. 13, in some embodiments of the present application, the battery cell 10 further includes: a binder 15 configured to attach and fix the second flanging portions 1243 of the plurality of second insulating members 124.

The binder 15 may be an insulating adhesive tape or a double-sided tape. One binder 15 may be provided, and one binder 15 is used to fix the plurality of second flanging portions 1243. A plurality of binders 15 may also be provided, and each binder 15 at least attaches two adjacent second flanging portions 1243. For example, two binders 15 are provided, the two binders 15 are adhesive tapes, the two binders 15 are arranged at an interval in the length direction (i.e. the first direction X) of the electrode assembly 13, and each binder 15 attaches one second flanging portion 1243 to two other adjacent second flanging portions 1243.

In the above solution, the relative positions of the second flanging portions 1243 of the plurality of second insulating members 124 may be fixed, to prevent the second flanging portions 1243 from being upwarped to expose the surface of the electrode assembly 13, causing the electrode assembly 13 to be short-circuited with the bottom wall 111, and resulting in a potential safety hazard.

Some embodiments of the present application provide a battery 100, including a battery cell 10. The battery 100 has the advantages of a compact structure and a high energy density.

Some embodiments of the present application provide a power consuming device, including a battery 100. The battery 100 is configured to provide electric energy, and the power consuming device has the advantages of a compact structure and a high energy density.

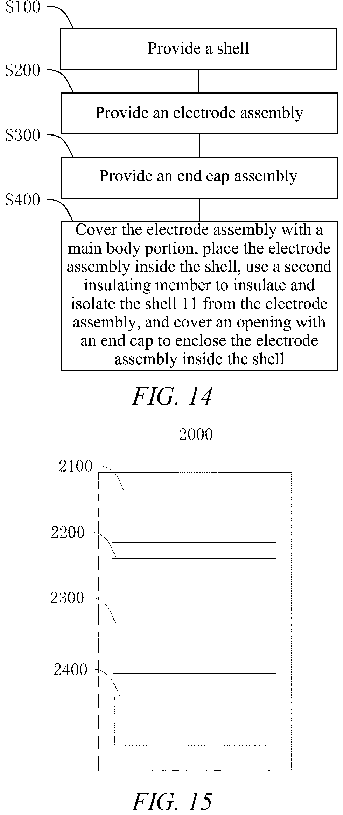

FIG. 14 is a schematic diagram of a method for manufacturing a battery cell according to some embodiments of the present application.

As shown in FIG. 14, some embodiments of the present application provide a method for manufacturing a battery cell, including:
S100: providing a shell 11, the shell 11 being provided with an opening.
S200: providing an electrode assembly 13;
S300: providing an end cap assembly 12, the end cap assembly 12 including an end cap 121, a first insulating member 123 and a second insulating member 124, where the first insulating member 123 is arranged between the electrode assembly 13 and the end cap 121 to insulate and isolate the electrode assembly 13 from the end cap 121, the second insulating member 124 includes a main body portion 1241 and a first flanging portion 1242, the first flanging portion 1242 is connected to one end of the main body portion 1241, and the first flanging portion 1242 is connected to the side of the first insulating member 123 facing the end cap 121 or the side of the first insulating member away from the end cap 121;
S400: covering the electrode assembly 13 with the main body portion 1241, placing the electrode assembly 13 inside the shell 11, using the second insulating member 124 to insulate and isolate the shell 11 from the electrode assembly 13, and covering the opening with the end cap 121 to enclose the electrode assembly 13 inside the shell 11.

FIG. 15 is a schematic diagram of an apparatus for manufacturing a battery cell according to some embodiments of the present application.

As shown in FIG. 15, some embodiments of the present application provide an apparatus 2000 for manufacturing a battery cell, including:
a first provision device 2100 configured to provide a shell 11, the shell 11 being provided with an opening;
a second provision device 2200 configured to provide an electrode assembly 13;
a third provision device 2300 configured to provide an end cap assembly 12, the end cap assembly 12 including an end cap 121, a first insulating member 123 and a second insulating member 124, where the first insulating member 123 is arranged between the electrode assembly 13 and the end cap 121 to insulate and isolate the electrode assembly 13 from the end cap 121, the second insulating member 124 includes a main body portion 1241 and a first flanging portion 1242, the first flanging portion 1242 is connected to one end of the main body portion 1241, and the first flanging portion 1242 is connected to the side of the first insulating member 123 facing the end cap 121 or the side of the first insulating member away from the end cap 121; and
an assembly module 2400 configured to cover the electrode assembly 13 with the main body portion 1241, placing the electrode assembly 13 inside the shell 11, using the second insulating member 124 to insulate and isolate the shell 11 from the electrode assembly 13, and covering the opening with the end cap 121 to enclose the electrode assembly 13 inside the shell 11.

As shown in FIG. 1 to FIG. 15, some embodiments of the present application further provide a square battery cell 10, including a shell 11, an end cap 121, an electrode assembly 13, a first insulating member 123, a second insulating member 124 and a binder 15, where the first insulating member 123 is lower plastic, the second insulating member 124 is a Mylar film, and the binder 15 is an adhesive tape. The second insulating member 124 is arranged between the end cap 121 and the electrode assembly 13, to insulate and isolate the end cap 121 from the electrode assembly 13. The second insulating member 124 includes a main body portion 1241, a first flanging portion 1242 and a second flanging portion 1243, and opposite ends of the main body portion 1241 are respectively connected to the first flanging portion 1242 and the second flanging portion 1243. Four second insulating members 124 are provided, one second insulating member 124 corresponding to one edge of the first insulating member 123.

Further, a groove 1234 is provided at a top surface (i.e. a first surface 1231) or a bottom surface (i.e. a second surface 1232) of the first insulating member 123, the groove 1234 may accommodate the first flanging portion 1242, so that the first flanging portion 1242 does not protrude from the surface of the first insulating member 123, and it can also accommodate welding protrusions during hot melting, so as to interfere with the upper end cap 121 or occupy an arrangement space of the lower electrode assembly 13.

During assembly, the top surface (i.e. the first surface 1231) or the bottom surface (i.e. the second surface 1232) of the first insulating member 123 are hot-melted to the first flanging portion 1242. Then the first insulating member 123 and the end cap 121 are assembled as a whole, and the end cap assembly 12 is formed by combining the electrode terminal 122 and other components on the end cap 121. The tab of the electrode assembly 13 is connected to the corresponding electrode terminal 122 through the current collecting member, the main body portions 1241 and the first flanging portions 1242 of four second insulating members 124 are bent to cover the side surface 1313 of the electrode assembly 13, main body portions 1241 of two adjacent second insulating members 124 are assembled, and four main body portions 1241 jointly cover the electrode assembly 13 in the circumferential direction. On one side of the bottom surface 1311 of the electrode assembly 13, four second flanging portions 1243 jointly cover the bottom surface 1311 of the electrode assembly 13. One of the second flanging portions 1243 is a large piece of folded edge, which completely covers the bottom surface 1311 of the electrode assembly 13, the other three second flanging portions 1243 are short folded edges, the three short folded edges cover the edge of the large piece of folded edge, and two binders 15 are used to attach and fix the four second flanging portions 1243, so as to complete insulation covering of the second insulating member 124 on the electrode assembly 13. The electrode assembly 13 covered with the second insulating member 124 is placed inside the shell 11, to weld the end cap 121 and the shell 11, completing the assembly of one battery cell 10.

In the battery cell 10 according to some embodiments of the present application, since the second insulating member 124 is wrapped from the top surface 1312 to the bottom surface 1311 of the electrode assembly 13, and a fixing process of the first insulating member 123 and the second insulating member 124 is performed before the first insulating member 123, the end cap 121 and the electrode assembly 13 are assembled, allowing to use upper and lower surfaces of the first insulating member 123 to be hot-melted to the first flanging portion 1242, thereby there is no requirement for the thickness of the first insulating member 123, which can effectively reduce the thickness of the first insulating member 123, and enables the battery cell 10 to have a compact structure and a high energy density.

It should be noted that the features in the embodiments of the present application may be combined with one another without conflict.

The foregoing descriptions are merely preferred embodiments of the present application, but are not intended to limit the present application. For those skilled in the art, the present application may have various modifications and variations. Any modifications, equivalent substitutions, improvements and the like made within the spirit and principle of the present application should fall within the scope of protection of the present application.

## Claims

1. A battery cell, comprising:
a shell having an opening;
an electrode assembly arranged inside the shell; and
an end cap assembly, comprising an end cap, a first insulating member and a second insulating member, wherein the end cap is configured to cover the opening, the first insulating member is arranged between the electrode assembly and the end cap, so as to insulate and isolate the electrode assembly from the end cap, the second insulating member comprises a main body portion and a first flanging portion, the first flanging portion is connected to one end of the main body portion, the main body portion is arranged between the shell and the electrode assembly, so as to insulate and isolate the shell from the electrode assembly, and the first flanging portion is connected to a side of the first insulating member facing the end cap or a side of the first insulating member away from the end cap.

2. The battery cell according to claim 1, wherein the first flanging portion is hot-melted to the side of the first insulating member facing the end cap or the side of the first insulating member away from the end cap.

3. The battery cell according to claim 1 or 2, wherein a groove is provided at the side of the first insulating member facing the end cap or the side of the first insulating member away from the end cap, the groove is located at an edge of the first insulating member, the groove is configured to accommodate the first flanging portion, and the first flanging portion is connected to a surface of the groove.

4. The battery cell according to claim 3, wherein the shape of the groove matches the shape of the first flanging portion.

5. The battery cell according to claim 3, wherein a depth of the groove is equal to a thickness of the first flanging portion.

6. The battery cell according to claim 3, wherein a width of the first flanging portion is less

7. The battery cell according to any one of claims 1-6, wherein the second insulating member comprises a plurality of first flanging portions, and the plurality of first flanging portions are arranged at intervals along a width direction of the main body portion.

8. The battery cell according to any one of claims 1-7, wherein a plurality of second insulating members are provided, the plurality of second insulating members are distributed along the circumference of the electrode assembly, and the main body portions of two adjacent second insulating members are assembled with each other.

9. The battery cell according to claim 8, wherein the first insulating member is rectangular, four second insulating members are provided, and the first flanging portions of the four second insulating members are each correspondingly connected to four edges of the first insulating member.

10. The battery cell according to claim 8, wherein the shell comprises a bottom wall and a side wall, the side wall is arranged around the bottom wall, the main body portion is arranged between the electrode assembly and the side wall, the second insulating member further comprises a second flanging portion, the second flanging portion is connected to the other end of the main body portion, and the second flanging portion is arranged between the bottom wall and the electrode assembly.

11. The battery cell according to claim 10, wherein the second flanging portions of the plurality of second insulating members jointly cover a side of the electrode assembly facing the bottom wall.

12. The battery cell according to claim 10 or 11, wherein the battery cell further comprises:
a binder configured to attach and fix the second flanging portions of the plurality of second insulating members.

13. A battery, comprising a battery cell according to any one of claims 1-12.

14. A power consuming device, comprising a battery according to claim 13, the battery being

15. A method for manufacturing a battery cell, the method comprising:
providing a shell provided with an opening;
providing an electrode assembly;
providing an end cap assembly, the end cap assembly comprising an end cap, a first insulating member and a second insulating member, wherein the first insulating member is arranged between the electrode assembly and the end cap, so as to insulate and isolate the electrode assembly from the end cap, the second insulating member comprises a main body portion and a first flanging portion, the first flanging portion is connected to one end of the main body portion, and the first flanging portion is connected to a side of the first insulating member facing the end cap or a side of the first insulating member away from the end cap; and
covering the electrode assembly with the main body portion, placing the electrode assembly inside the shell, using the second insulating member to insulate and isolate the shell from the electrode assembly, and covering the opening with the end cap to enclose the electrode assembly inside the shell.

16. An apparatus for manufacturing a battery cell, the apparatus comprising:
a first provision device configured to provide a shell provided with an opening;
a second provision device configured to provide an electrode assembly;
a third provision device configured to provide an end cap assembly, the end cap assembly comprising an end cap, a first insulating member and a second insulating member, wherein the first insulating member is arranged between the electrode assembly and the end cap, so as to insulate and isolate the electrode assembly from the end cap, the second insulating member comprises a main body portion and a first flanging portion, the first flanging portion is connected to one end of the main body portion, and the first flanging portion is connected to a side of the first insulating member facing the end cap or a side of the first insulating member away from the end cap; and
an assembly module configured to cover the electrode assembly with the main body portion, place the electrode assembly inside the shell, use the second insulating member to insulate and isolate the shell from the electrode assembly, and cover the opening with the end cap to enclose the electrode assembly inside the shell.
